# EUROPEAN PATENT SPECIFICATION

(11) **EP 3 295 012 B1**
(45) Date of publication and mention of the grant of the patent: **03.04.2019**
(21) Application number: 16727856.3
(22) Date of filing: 09.05.2016
(51) Int. Cl.: F02K 9/52, F02K 9/68, F02K 9/95

(54) **ROCKET ENGINE IGNITION SYSTEM**
RAKETENMOTORZÜNDSYSTEM
SYSTÈME D'ALLUMAGE DE MOTEUR DE FUSÉE

(30) Priority: 08.05.2015 EP 15166991; 18.06.2015 EP 15445001
(43) Date of publication of application: 21.03.2018
(73) Proprietor: ECAPS Aktiebolag, 171 04 Solna (SE)
(72) Inventor: ANFLO, Kjell, 136 73 Haninge (SE)
(74) Representative: Brann AB
(86) International application number: PCT/SE2016/050415
(87) International publication number: WO 2016/182496

(56) References cited:
- EP-A1- 2 604 838
- WO-A1-2014/193300
- WO-A2-2005/054674
- US-A1- 2007 280 865
- US-A1- 2008 264 372

## Description

### FIELD OF THE INVENTION

The present invention relates to an ignition system for a liquid propellant chemical rocket engine, which comprises a thermal-catalytic element for initiating decomposition of the liquid propellant, and an electrical heater for electrically preheating the thermal-catalytic element, wherein the thermal-catalytic element is thermally connected to the electrical heater, both of which are located in a flow path of the propellant, a rocket engine, and a preburner, respectively, comprising the ignition system, as well as a method of preheating a liquid propellant rocket engine using the system, and a spacecraft comprising such engine.

### BACKGROUND ART

In missiles, space launch vehicles, orbit raisers and in-space applications, such as satellites and other spacecraft, liquid propellant thrusters, liquid propellant rocket engines, and liquid propellant gas generators are often used. Such thrusters and rocket engines can for example be used for the purpose of manoeuvring and attitude control of missiles and satellites, and for roll control and propellant settling of the main propulsion system of other space vehicles, in which case the thrusters, or rocket engines are often used in continues firing, off-modulation firing, pulse mode and single pulse firing, where the firing duration typically can be fractions of a second to hours. For such purposes thrusters, or rocket engines, can be used with a thrust of typically from 0.1 N to about 5 kN.

Such thrusters may advantageously be operated on reduced risk liquid storable propellants, such as Ammonium DiNitramide (ADN) based liquid monopropellants, and bipropellants, e.g. High Performance Green Propulsion (HPGP) monopropellants, and bipropellants, or on hydroxyl ammonium nitrate (HAN) based liquid monopropellants, and bipropellants. Thrusters and the functional elements thereof such as the injector and reactor for such propellants have been described in e.g. WO 02/095207, WO 2013/169192, WO 2013/169193, and WO 2014/189451.

US 2007/0280865 discloses an apparatus and method to electrically induce the decomposition of a liquid propellant for propulsion. The propellant can be an aqueous based amine propellant, such as HAN. The liquid propellant solution, such as HAN, acts as a conduit to complete a circuit between a first electrode and a second electrode. A charge source that is capable of applying a voltage is connected to the electrodes. An electric current flowing between the electrodes and the propellant may induce propellant decomposition.

However, reduced risk liquid storable propellants based on ionic liquids based on ADN, HAN etc., are to date not known to spontaneously decompose (i.e. at room temperature) over a catalyst fast enough to meet the operational requirements for monopropellant thrusters, nor are known to be hypergolic with a second propellant in dual mode or bipropellant thrusters. Therefore the major drawback of thrusters for the above reduced risk liquid storable propellants is that they are not known to be able to be cold started to achieve nominal ignition, but require preheating of the thermo/catalytic reactor to a temperature of about 300-400°C in order to achieve nominal ignition. Such prior art thermo/catalytic reactors include a heat bed. In the prior art, preheating of the heat bed, which bed may exhibit catalytic activity, is accomplished by means of an electrical heater located outside the engine with a thermal connection in between. For example, according to WO 2013/050507 thrusters are typically heated by means of heating applied to the external surface of the hollow body of the thruster, or applied to the injector.

In the above prior art thrusters the reduced risk liquid storable propellant is distributed in liquid phase by an injector into a preheated reactor. The first stage of the preheated reactor, i.e. the heat bed of the above prior art reactors, (which acts like a heat reservoir) brings the propellant into gas phase by means of boiling. After ignition, the first stage of the reactor acts as a thermal choke, thus suppressing the back flow of heat from overheating the injector and feed tube. The principle for propellant decomposition, ignition, and sustained combustion is described in WO 02/095207, WO 2013/169192, WO 2013/169193, and WO 2014/189451.

For such reduced risk liquid storable propellant thrusters having a thrust level of approximately 0.1 to 2 N the required electrical power consumption and start-up time (i.e. the reactor preheating duration in the case of the above reduced risk liquid storable propellant thrusters) is slightly higher but still comparable to the start-up time of similar hydrazine thrusters, e.g. less than 10 W and a preheating time of 15 to 30 minutes before the thruster can be fired giving nominal performance.

However, the present inventor has found that, for the above reduced risk liquid storable propellant thrusters, with increasingly higher thrust levels the electrical power and preheating time, i.e. the energy required, increases significantly as compared to a hydrazine thruster of comparable thrust level, which in addition can also be cold started (i.e. without any preheating) in emergency. The number of cold starts performed with a thruster comprising a catalyst will however severely limit its operational life time.

Making the reduced risk liquid storable propellant more reactive with an aim to enable cold start in order to solve the issue of increasingly higher required energy consumption and start-up time would severely deprive the reduced risk propellant of its advantageous properties, such as e.g. being associated with a reduced risk, and being stable and storable, as the resulting propellant thereby would become significantly more sensitive.

Accordingly, it would be desirable to be able to reduce the start-up time of a thruster for a liquid ADN based monopropellant, without having to alter the composition of the monopropellant to make it more sensitive or reactive, thus resulting e.g. in a different and more limiting transport classification of the propellant.

### SUMMARY OF THE INVENTION

The present inventor has found that the total start-up time and electrical energy required to achieve propellant decomposition and ignition leading to sustained combustion in thrusters designed in accordance to the prior art described in WO 02/095207, WO 2013/169192, WO 2013/169193, and WO 2014/189451 can be significantly reduced by the invention which is based on a relatively simple and low cost device, and which will have minimum impact on the vehicle's system design or mission constraints.

Accordingly, for a prior art ignition system for a liquid propellant chemical rocket engine, comprising injector **10** for injection of a liquid propellant, a catalytic element **20** for initiating decomposition of the liquid propellant, and an electrical heater **30** for electrically preheating the catalytic element, the above problem has been solved by means of using a catalytic element thermally connected to an electrical heater located in a flow path of the propellant. The inventive combination of the catalytic element and electrical heater is also referred to as igniter **100.** The catalytic element thermally connected to the electrical heater, i.e. igniter **100,** can either be located in the flow path of the propellant into the reactor of a rocket engine **1,** in the flow path of the propellant into the reactor of a preburner **200** connected to a rocket engine **2,** or inside a preburner **300** connected to injector **405** of the engine **3.**

By placing the electrical heater inside the reactor radiation losses during pre-heating will be significantly reduced as compared to a prior art exterior heater relying on heat transfer from outside the reactor to the heat bed inside the reactor. Accordingly, by means of the present invention, using a given electric power, heating up to a given pre-heating temperature can be accomplished substantially faster. Moreover, by means of the present invention, using a given electrical power, a significantly higher pre-heating temperature is obtainable.

In a first aspect the invention relates to the above inventive ignition system for a liquid propellant chemical rocket engine 1, 2, 3 comprising: an injector 10 for injection of a liquid propellant; a catalytic element 20 for initiating decomposition of the liquid propellant; and an resistive electrical heater (30) for electrically preheating the catalytic element, wherein the catalytic element is thermally connected to said resistive electrical heater, so as to form a combination 100 of said heater and said catalytic element, wherein said combination is referred to as an igniter 100, and wherein said catalytic element and heater are located in a flow path of the propellant.

The inventive ignition system can be used in and implemented into the reactor of a liquid propellant chemical rocket engine **1** of the prior art.

Accordingly, in a further aspect the present invention relates to a liquid propellant chemical rocket engine **1** including a reactor comprising the inventive ignition system, wherein the flow path is that of the propellant into the reactor of the rocket engine 1. Such implementation of the inventive ignition system is primarily intended for small thrusters (i.e. with a nominal thrust below approximately 50 N), such as e.g. having a nominal thrust within the range of 0.1 N to 50 N.

Since the thermal choking properties of the upstream part of the reactor according to the invention can be made more efficient, the upstream part can be shortened (thus reducing combustion chamber volume), as compared to a prior art reactor, and thereby the inventive thruster can achieve a faster thrust response.

The inventive ignition system can also form part of a preburner **200** attached to an engine **2** of the prior art.

Accordingly, in embodiment the inventive system relates to an ignition system for a liquid propellant chemical rocket engine **2** which system is comprised in a preburner 200, further comprising a preburner combustion chamber **110;** and an outlet **220** from the combustion chamber for hot gases to be led into the rocket engine **2.** Such implementation of the inventive ignition system is primarily intended for larger thrusters (i.e. with a thrust above approximately 50 N), such as e.g. having a nominal thrust within the range of 50 N to 2 kN, wherein the ignition system is placed in a preburner **200,** which in turn heats the reactor of the thruster **2.**

In a further aspect the invention relates to a liquid propellant chemical rocket engine **2** comprising the inventive preburner ignition system, wherein the ignition system is located upstream of the rocket engine, and the outlet **220** of the preburner **200** is connected to the upstream end of the rocket engine **2,** so that hot gases from the preburner can be led into the rocket engine.

In yet a further aspect the invention relates to a liquid propellant chemical rocket engine **3,** comprising the inventive ignition system, wherein the ignition system is integrated into a preburner **300** connected to the injector **405** of the rocket engine, so that a hot gas flow **440** from the preburner can be directed towards a portion of the inner surface of the rocket engine reactor housing which surface is located upstream of the catalyst bed, and wherein the injector **405** is configured to spray the propellant **430** towards said portion of the inner surface of the reactor housing. Such implementation of the inventive ignition system is primarily intended for even larger thrusters, i.e. with a thrust of approximately 200 N, or more, such as e.g. having a thrust within the range of 200 N to 2 kN.

In yet an aspect the invention relates to a spacecraft comprising an engine **1,** and/or **2,** and/or **3** of the invention.

In a preferred embodiment of the inventive ignition system the heater voltage is the same as the voltage for the thruster propellant flow control valve(s), in order not to complicate the control system electronics.

In a preferred embodiment the injector **10** and igniter **100** are integrated and fabricated by means of Additive Manufacturing, in order to achieve optimum efficiency, reliability and lowest non-recurring cost.

In yet a further aspect the invention relates to a method of preheating a liquid propellant rocket engine **1, 2, 3** comprising the steps of: A) heating by means of a resistive electrical heater **30** a catalytic element **20** to a pre-determined temperature; B) providing a flow of a liquid monopropellant; C) contacting the flow of liquid propellant with the heated catalytic element, so as to evaporate and initiate decomposition of the liquid propellant; D) combusting the liquid propellant, so as to form hot gases; and, E) leading the hot gases downstream through the engine **1, 2, 3** so as to heat same, wherein, in step A, the electrical heat is generated inside the reactor of the engine **1,** inside the reactor of a preburner **200** attached to the engine **2,** or inside a preburner **300** connected to injector **405** of the engine **3,** by means of a resistive electrical heater **30.**

In one embodiment the method of preheating is carried out so as to accomplish an ignition sequence of one or more heating (start-up) pulses, which precede the start of the engine, in which case steps A through E are carried out intermittently so as to accomplish pulsed heating of the engine.

The inventive ignition system is intended for use with a high performance, low-hazard and environmental benign propellant, such as e.g. HAN or ADN based propellants, for example LMP-103S, or similar, which do not spontaneously decompose fast enough over a not preheated catalyst, nor are hypergolic with another high performance, low-hazard and environmental benign propellant. A major advantage of the invention is that the ignition system can be operated on same propellant as the rocket engine **1, 2, 3** itself. It is further conceived that the inventive ignition system also could be used with nitrous oxide monopropellant.

The inventive ignition system is primarily intended for engines with a thrust within the range of 0.1 N to about 5 kN, but could possibly also be used with larger engines, especially in bipropellant applications.

The inventive ignition system can e.g. be used in the dual mode engines disclosed in WO 2014/189451 when hydrogen peroxide is not being used for preheating the dual mode bipropellant engine disclosed therein.

The inventive ignition system can be used for reducing the required pre-heating time of a liquid propellant chemical rocket engine, and/or for reducing the electrical energy required for preheating a liquid propellant chemical rocket engine.

Further advantages and embodiments will be apparent from the following detailed description and appended claims.

### DEFINITIONS

The inventive combination of catalytic element **20** and electrical heater **30** will also be referred to herein as "primary reaction stage", "first catalytic stage", or "igniter" **100.** Accordingly, as used herein the term "igniter" **100** denotes a combination of a catalytic element **20** and an electrical heater **30,** wherein the catalytic element is thermally connected to the electrical heater, and is preferably also attached to said heater.

As used herein the term "combustion chamber" **50, 110, 210, 450** includes the overall interior volume of the thruster **1, 2, 3,** and preburner **200,** respectively, i.e. the volume downstream of the injector **10, 15,** and **405,** respectively, and notably the catalyst bed. Accordingly, at instances, **50, 110, 210,** and **450,** respectively, has been used to denote the catalyst bed of the corresponding combustion chamber.

### BRIEF DESCRIPTION OF THE ATTACHED DRAWINGS

FIGURE 1 shows a cross-sectional view of a 20 N engine **1** of the invention having the inventive ignition system integrated into the reactor of the engine.
FIGURE 2 shows a preferred embodiment of the inventive igniter **100.**
FIGURE 3 shows a cross-sectional view of a first embodiment of a 200 N engine **2** of the invention, having the ignition system implemented into a preburner **200** attached to the reactor of engine **2.**
FIGURE 4 shows a cross-sectional view of a second embodiment of a 200 N engine **3** of the invention, wherein the inventive igniter **100** is used as a preburner connected to the injector **405** of the reactor of engine **3.** This embodiment combines the inventive igniter with the injection and heating of propellant disclosed in EP 15163530.7.
FIGURE 5 shows the temperature in the catalytic bed **50** downstream of the electrical heater **30** during heating (beginning at 0 seconds in **FIG. 5**).
FIGURE 6 shows the electrical power consumption during the heating shown in **FIG. 5****.**
FIGURE 7 shows the required start-up energy for prior art thrusters, as well as the projected energy required when using the inventive igniter **100.**

### DETAILED DESCRIPTION

In the prior art the electrical heater of a rocket engine for ADN-based liquid propellants has invariably been located outside the engine. The present inventors have found that the heater can be placed within the reactor. According to the invention the propellant is by means of the injector **10** sprayed on to a heated catalytic element **20,** which is thermally connected to an electrical heater **30,** thus leading to decomposition, ignition and combustion of the propellant.

The catalytic element preferably exhibits a large catalytic surface for enhanced contact with the propellant and for enhanced catalytic capacity, and preferably exhibits low mass in order to be able to heat up more quickly by the electrical heater. Accordingly, in a preferred embodiment the inventive igniter **100** is designed to have low mass, thus being able to heat up quickly by the electrical heater.

The electrical heater **30** of igniter **100** is located in close proximity to the catalytic element **20,** and is thermally connected to the catalytic element, and is also preferably attached to the electrical heater.

The igniter will be cooled by the flow of propellant being sprayed onto the igniter. At the same time, the igniter will absorb heat from the downstream combustion and function as a heat reservoir, and, thus, in this sense, function as a prior art heat bed.

The electrical heater is preferably a fast response electrical heater.

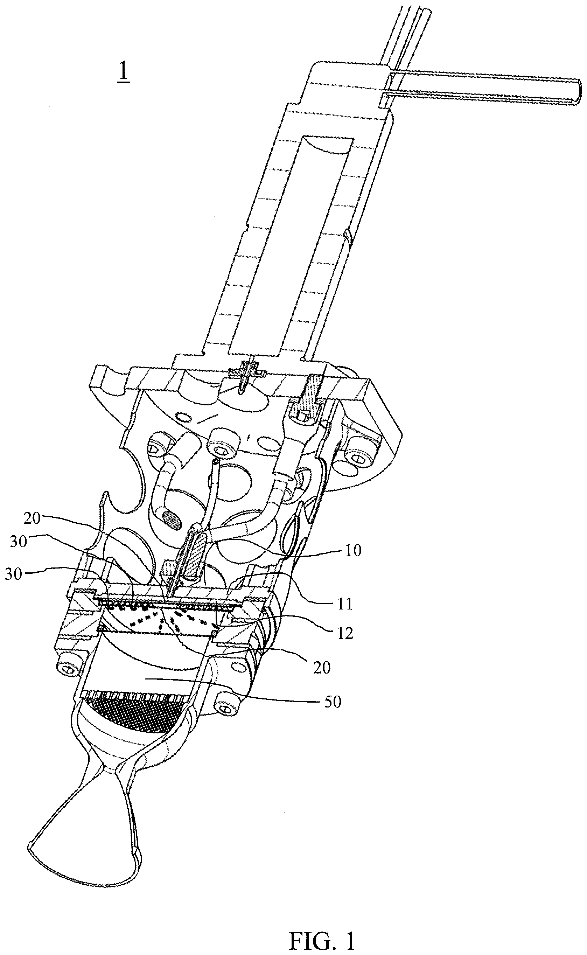

The function of the injector **10** of the invention is to distribute the propellant over the igniter, such as by spraying. In a preferred embodiment of the invention the injector also serves to finely divide into droplets or atomize the propellant being injected in order to further enhance the heat transfer from the catalytic element to the propellant and contact of the propellant with the catalytic element. Such embodiment is shown in **FIG. 1****.** With reference to **FIG. 1****,** the injector **10** comprises an injector head **11,** and an injector face **12.**

Upon contact with the hot surface of the catalytic element ignition of the propellant is initiated, which generates gas and heat, which will flow downstream in the combustion chamber and heat the reactor of the engine **1, 2.**

In a preferred embodiment of the invention the injector **10,** design and choice of material (e.g. materials with high thermal conductivity) thereof, are such that the injector is efficiently cooled by the propellant. For example, by means of a plurality of orifices (not shown) distributed over the surface of injector face **12,** cooling of the injector face by means of liquid propellant being injected will be enhanced.

Accordingly, in a preferred embodiment of the invention, a shower head injector is used to spray the propellant on to the igniter, as shown in **FIG. 1****.**

The inventive ignition system may preferably be operated such that the primary reaction stage is superheated, i.e. to a temperature which is significantly higher than for the prior art reactor ignition temperatures, i.e. well above 300°C, more preferably well above 400°C, such as a temperature within the range of e.g. 500-800°C, more preferably 700-800°C. As pointed out above, with the heater located inside the reactor of a rocket engine **1,** or of a preburner **200,** a substantially higher pre-heating temperature can be reached within a shorter time. Also, such superheating will incur significantly reduced electrical start-up energy consumption. The benefit with superheating is that the primary reaction stage can handle significantly higher propellant flow rates for a given size, since the propellant decomposition becomes much faster, thus providing much higher heat release within the primary reaction stage. At the superheating temperature a larger number of decomposition and combustion reactions will occur than at the lower prior art heating temperature of 300-400°C. Accordingly, at superheating temperature also some of the prior art reactions only occurring downstream will now occur already at the primary reaction stage, thus providing more heat upstream.

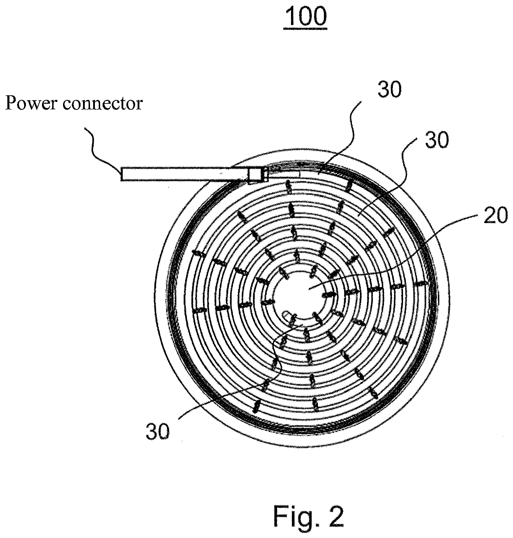

The catalytic element **20** should be thermally conductive and light weight, and can for example comprise a mesh, as in **FIG. 2****,** a sponge or honeycomb structure. The catalytic element is preferably metallic. A suitable material for the catalytic element is a Pt/Rh alloy.

The heater **30** comprises a heating element in the form of a cable. The cable is preferably provided in the form of a flat spiral coil, e.g. as shown in **FIG. 2****.** The heating cable must have a heat resistant sheath, preferably a Pt/Rh sheath. The sheath should be catalytic, so as to endow the inventive heater with catalytic properties.

The heater **30** is attached to the catalytic element **20.** For example, a heating cable may be attached to a catalytic mesh by means of stitches, such as shown in **FIG. 2****.** More than one catalytic element **30** may be stacked to the heater. For example, a catalytic element **20** may be attached both to the upstream, and the downstream sides, respectively, of the heater **30.**

According to the invention the heater **30** preferably supports the catalytic element(s) **20,** and the catalytic element(s) preferably supports the heater. Inventive igniter **100** could also comprise two or more heaters stacked in a staged structure with catalytic elements in between the heaters.

The igniter must be permeable to the combustion gases, e.g. such as the igniter shown in **FIG. 2****,** comprising a heater cable coil **30** attached by means of stitches to a platinum (Pt) mesh **20.**

In a preferred embodiment of the inventive ignition system the injector **10** and igniter **100** are integrated and fabricated by means of Additive Manufacturing in order to achieve optimum efficiency, reliability and lowest non-recurring cost.

When implemented into an engine as described in WO 02/095207, WO 2013/169192, WO 2013/169193, and WO 2014/189451 the inventive igniter **100** is placed upstream of the catalyst bed.

By means of an injector face **12** capable of distributing the propellant over the whole cross-section of the reactor onto the igniter, the thermal choke properties of the inventive engine will be improved over the prior art engines, due to more effective cooling of the injector face.

By means of introducing into the inventive ignition system a small distance (not shown) separating injector face **12** and igniter **100,** distribution of propellant over the igniter can be improved. At the same time, heat transfer from downstream combustion will be further suppressed, since direct heat transfer by conduction from the heat bed to the injector face thereby will be inhibited. Instead, back flow of heat from downstream combustion to the injector face will be limited to radiation of heat from the igniter and heat bed, and to heat conducted to the injector via the walls of the reactor.

Accordingly, since the thermal choke properties of the upstream part of the reactor according to the invention can be made more efficient, the upstream part of the reactor can be shortened, thus reducing the combustion chamber volume, and thereby the inventive thruster **1** can achieve faster thrust response.

When integrated into a rocket engine **1** the heat generated by the combustion of the propellant upon ignition using the inventive ignition system may be sufficient to achieve sustained combustion in the engine. In instances when sustained combustion cannot be obtained upon ignition, pulsed heating can be used according to the invention as will be described below.

When implemented into a prior art reactor, the igniter **100** will typically replace a portion of the heat bed of the reactor. However, the mass, and therefore also heat capacity, of the inventive igniter is reduced as compared to the corresponding omitted portion of the prior art heat bed. Accordingly, depending on the temperature, the mass of the igniter, and temperature of the downstream catalyst bed, the heat produced upon ignition of the propellant flow using the inventive igniter might not be sufficient for establishing sustained combustion in the engine **1.** In such case, in order to avoid a wash-out and undesired cooling of the igniter and catalyst bed, pulse mode firing wherein one start-up (heating) pulse or a train of shorter start-up pulses is fired is used to sufficiently heat the catalyst bed to lead to sustained combustion in engine **1.**

During a start-up pulse the catalyst bed will be heated by the partly decomposed hot gas from the igniter, which gas will begin to further decompose the propellant components into an increasingly exothermal reaction leading to increased catalyst bed temperature and increased combustion efficiency. A number of start-up pulses can be used to heat the primary reaction stage and catalyst bed to a sufficiently high temperature so that sustained combustion can be obtained upon ignition next.

In a preferred embodiment of the inventive igniter **100,** the electrical heater is embedded in a catalytic mesh (or sponge) which has a good thermal conductivity, e.g. about 50 W/mK, a low relative mass, and which is significantly thermally decoupled from the thruster structure. The igniter is the held in place by a ceramic peripheral support with low thermal conductivity. The catalytic mesh extends from the heater both upstream towards the injector, and downstream of the heater towards the main reactor. The purpose of this design of the igniter is to completely atomize the propellant before it enters into the downstream main reactor. The invention thereby minimizes or even eliminates the upstream heat bed (which may exhibit catalytic activity) in prior art thruster designs.

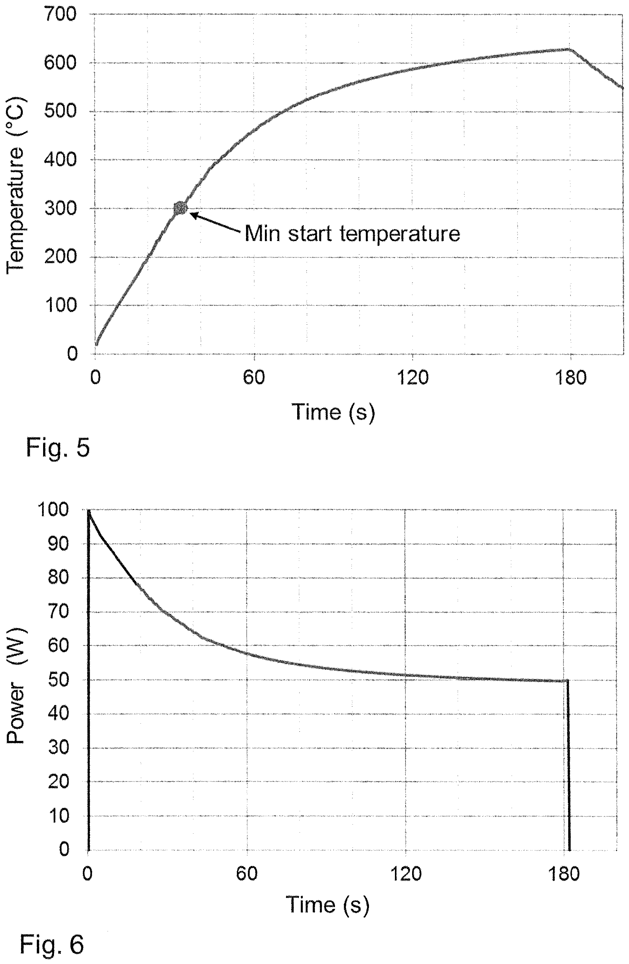

The inventors have verified the thermal response (shown in **FIG. 5**) of the invention by means of an igniter prototype with embedded heater built into a thruster such as shown in **FIG. 1****.** At, and above, 300°C (achieved in about 30 seconds), the reactor has reached a temperature where the propellant decomposition leading to ignition is fast enough to achieve the desired thrust build-up response time, shown as a dot in **FIG. 5** (denoted "Min start temperature"). The target for the invention was to reach the ignition temperature in less than 60 seconds. The higher the reactor temperature is, the higher bed loads (i.e. propellant flow rates) the igniter can handle without being saturated. After 180 s the heater power is switched off, as shown by a temperature drop, and a power drop, in **FIGS. 5** and **6****,** respectively. In **FIG. 6** the supply voltage is 28 VDC and the power is "automatically" reduced due to the physical characteristics (resistance vs. temperature) of the heater which will reach thermal equilibrium and maintain the desirable start temperature during heating period. The energy required to heat the prototype to 300°C within 30 seconds is 72 kJ. This corresponds to at least 20% less energy consumption compared to prior art.

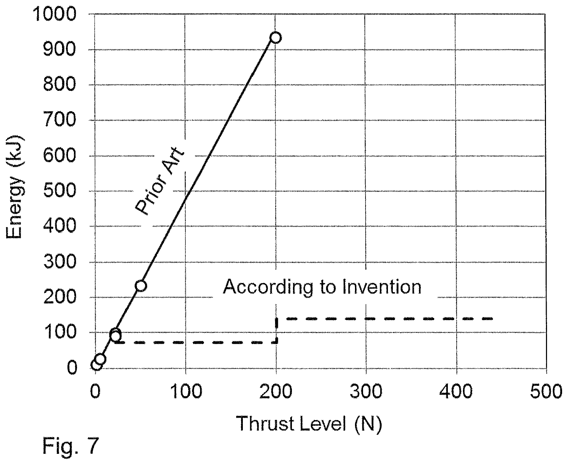

However, for larger thrusters of prior art the required energy to bring the reactor to nominal start temperature for firing will significantly increase with thruster size as can be seen from **FIG. 7****.**

The prototype igniter with embedded heater has the capacity to ignite 10 to 25 N thrusters. For somewhat larger thrusters the inventive igniter can be up-scaled, but this may increase the required electrical power and/or heating time.

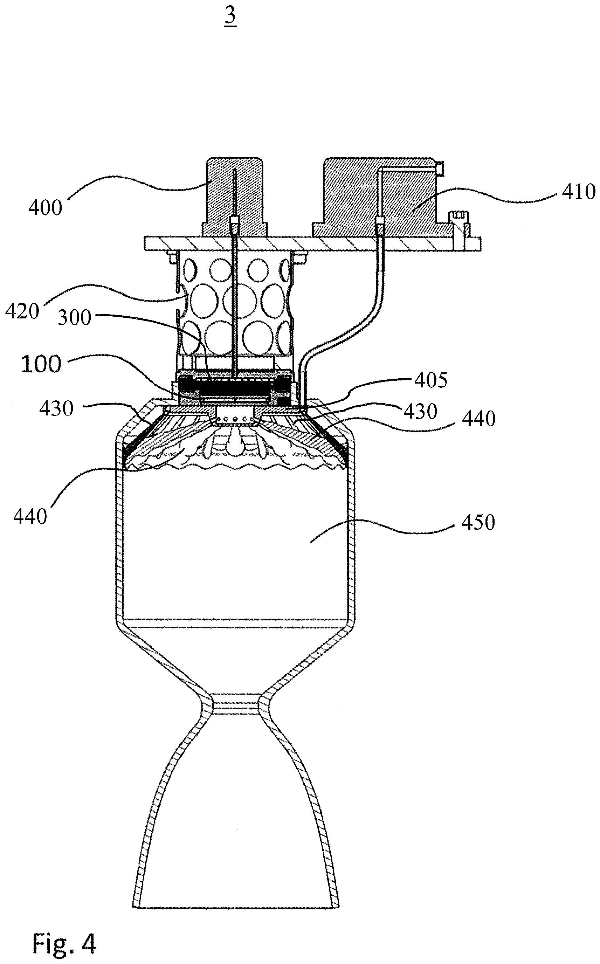

For yet larger thrusters, such as the 200 N thruster **3** shown in **FIG. 4****,** the inventive igniter can be used as a preburner as shown in **FIG. 4****.** In **FIG. 4** reference numeral **400** denotes igniter propellant valve, **410** denotes a main propellant flow valve, **420** is a thermal stand-off, **440** igniter hot gas flow, **430** main propellant flow, and **450** represents the main catalyst bed. The embedded igniter can for example be used in a 200 N thruster. For such larger thrusters, the injector and design disclosed in EP 15163530.7 can be used, e.g. as shown in **FIG. 4****.** The hot atomized propellant from the embedded igniter is directed against the wall of the reactor and combusted therein. When a sufficiently high preheating temperature has been accomplished in the main reactor by means of the inventive preburner, the main reactor is ready for start, and the main propellant flow valve can be opened. With reference to **FIG. 7****,** the use of the inventive igniter as a preburner in a larger thruster, such as 200 N and larger, will significantly reduce the required start-up energy as compared to a prior art thruster, and also the heating time.

In a preferred embodiment of the inventive liquid propellant chemical rocket engine **1,** a flow restrictor (not shown), preferably a cavitating venturi, is implemented into the propellant flow path in the thruster **1** upstream of the injector **10** in order to supress the propellant flow surge, which otherwise will occur at the beginning of each pulse fired and before the combustion chamber pressure is built up, which leads to excessive cooling of the ignition system and upstream part of the reactor. A flow restrictor, such as a cavitating venturi, may similarly be implemented in the engine **3,** upstream of injector **405,** on either or both of the main propellant feed line, and igniter propellant feed line.

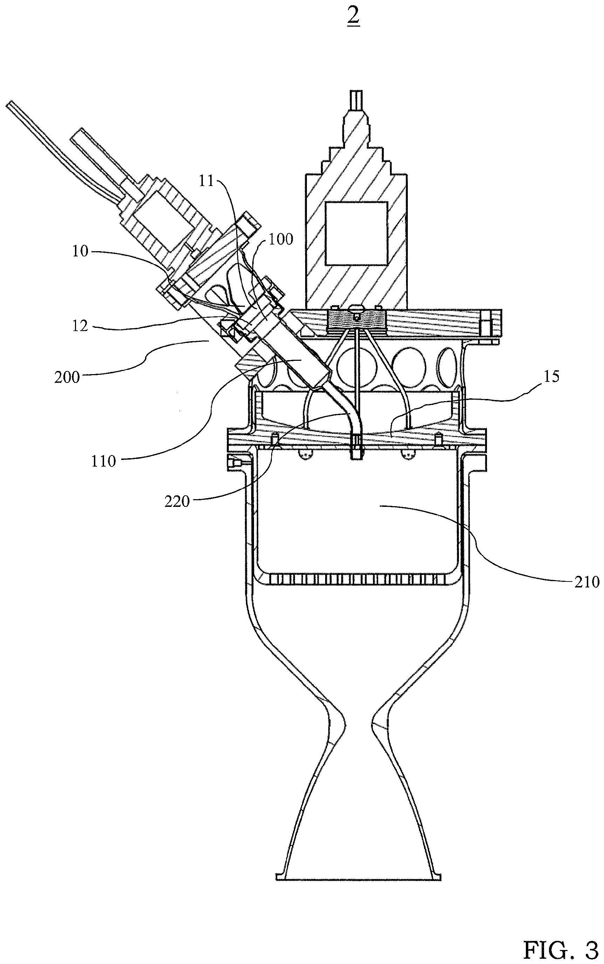

When implemented into a preburner **200** as shown in **FIG. 3****,** according to the invention, pulse mode firing of the igniter **100** will be used, comprising one or more start-up pulses of the preburner, until the heat bed and catalyst bed of the thruster **2** are sufficiently heated for sustained combustion to be accomplished upon ignition of the thruster **2.**

The principal design of the inventive preburner **200** is similar to that of an engine **1,** except for the downstream nozzle of the engine and the presence of the inventive igniter. Accordingly, with reference to **FIG. 3****,** the inventive preburner **200** comprises from the downstream end an outlet **220** for hot gases, a preburner combustion chamber **110** comprising a catalyst bed and heat bed, an igniter **100,** and an injector **10,** which injector comprises injector head **11** and injector face **12.**

As will be obvious to the person of ordinary skill in the art, a conventional small liquid propellant chemical thruster could be used to preheat a larger thruster **2.** Such solution is however not considered sufficiently effective by the present inventor, and thus inferior to the solution offered herein, which is based on the use of the inventive igniter.

A flow restrictor (not shown), preferably a cavitating venturi flow restrictor, may preferably be implemented into the propellant flow path to the preburner upstream of the injector **10** in order to supress the propellant flow surge, which otherwise will occur at the beginning of each pulse fired and before the combustion chamber pressure is built up in the preburner. A flow restrictor (not shown) is preferably also implemented into the propellant flow path to the thruster **2** upstream of the injector **15** of rocket engine **2.**

In a preferred embodiment of the inventive ignition system one or more temperature sensors, i.e. thermocouples, are implemented into the igniter **100,** which are used for monitoring and control of the ignition sequence. In a preferred embodiment of the inventive ignition system the temperature sensor is the heater **30** itself, which is used as part of a thermocouple.

An initial firing sequence of the inventive thruster **1** or preburner **200** (of inventive engine **2**) begins with electrically powering the heater **30,** thus bringing the igniter **100** to its operational temperature within typically about ten seconds. Immediately thereafter, one start-up (heating) pulse, or a train of shorter start-up pulses is fired (typically a few seconds), to sufficiently heat the catalyst bed to lead to sustained combustion. Thereafter, typically within 60 seconds the thruster **1, 2** is ready for immediate firing of any pulses. If no pulses are fired the reactor temperature slowly decreases until the lower temperature limit where nominal firing can be performed is reached. Temperature sensor(s) indicates when this limit is reached and a heating pulse is fired again. Conservation of heat using the engine concept of WO 2013/169192 will delay the temperature decrease and the time until the lower temperature limit where nominal firing can be performed is reached.

## Claims

1. An ignition system for a liquid propellant chemical rocket engine (1, 2, 3) comprising:
an injector (10) for injection of a liquid propellant; a catalytic element (20) for initiating decomposition of the liquid propellant; and a resistive electrical heater (30) for electrically preheating the catalytic element,
**characterized in that**
the catalytic element is thermally connected to said resistive electrical heater, so as to form a combination (100) of said heater and said catalytic element, wherein said combination is referred to as an igniter (100) and said heater comprises a heating element in the form of a cable, said cable having a heat resistant sheath, and **in that** said catalytic element and heater are located in a flow path of the propellant.

2. A liquid propellant chemical rocket engine (1), comprising the ignition system of claim 1, wherein the ignition system is integrated into the reactor of the rocket engine, and wherein the flow path is that of the propellant into the reactor of the rocket engine (1).

3. The ignition system of claim 1 for a liquid propellant rocket engine (2), which system is comprised in a preburner (200), wherein the system additionally comprises:
a preburner combustion chamber (110); and, an outlet (220) from the preburner combustion chamber for hot gases to be led into the rocket engine (2) for heating same, wherein the flow path is that of the propellant into the preburner.

4. A liquid propellant chemical rocket engine (2), comprising the ignition system of claim 3, wherein the ignition system is located upstream of the rocket engine and the outlet of the system is connected to the upstream end of the rocket engine, so that hot gases from the preburner can be led into the rocket engine.

5. A liquid propellant chemical rocket engine (3), comprising the ignition system of claim 1, wherein the ignition system is integrated into a preburner (300) connected to the injector (405) of the rocket engine for preheating the rocket engine, which preburner is configured so as to enable a hot gas flow (440) from the preburner to be directed towards a portion of the inner surface of the rocket engine reactor housing which surface is located upstream of the catalyst bed of the rocket engine, and wherein the rocket engine injector (405) is configured to spray the propellant (430) towards said portion of the inner surface of the rocket engine reactor housing.

6. The chemical rocket engine (1) of claim 2, or the rocket engine (2) of claim 4, wherein one or more temperature sensors are implemented into the igniter (100).

7. A method of preheating a liquid propellant chemical rocket engine (1, 2, 3) comprising the steps of:
A heating by means of a resistive electrical heater (30) a catalytic element (20) to a pre-determined temperature;
B providing a flow of a liquid monopropellant;
C contacting the flow of liquid propellant with the heated catalytic element, so as to evaporate and initiate decomposition of the liquid propellant;
D combusting the liquid propellant, so as to form hot gases; and,
E leading the hot gases downstream through the engine (1, 2, 3) so as to heat same,
**characterized in that**
in step A, the electrical heat is generated inside the reactor of the engine (1), inside a preburner (200) attached to the engine (2), or inside a preburner (300) connected to injector (405) of the engine (3), by means of a resistive electrical heater (30) comprising a heating element in the form of a cable, said cable having a heat resistant sheath.

8. The method of claim 7, wherein the flow of liquid monopropellant is sprayed, atomized, or finely divided into droplets before being contacted with the catalytic element.

9. The method of claim 7 or 8, wherein steps A through E are carried out intermittently, so as to accomplish pulsed heating of the engine (1, 2).

10. The method of any one of claims 7-9, additionally comprising the step of detecting the preheating temperature at one or more given locations in the reactor of the engine (1, 2), or of the preburner (200).

11. The method of any one of claims 7-10, wherein steps A through D are carried out in a preburner (200) connected to the upstream end of the rocket engine (2), so that, in step E, hot gases from the preburner can be led into the rocket engine.

12. The method of any one of claims 7-11, wherein steps A through E are repeated until sufficient preheating temperature of the engine (1, 2) has been achieved in order for sustained combustion in the engine to be attainable upon injection therein of the liquid propellant.

13. A spacecraft comprising a liquid propellant chemical rocket engine (1) of claim 2, and/or a liquid propellant chemical rocket engine (2) of claim 4, and/or a liquid propellant chemical rocket engine (3) of claim 5.

## Patentansprüche

1. Zündsystem für ein chemisches Raketentriebwerk (1, 2, 3) für Flüssigtreibstoff, mit:
einer Einspritzeinrichtung (10) zum Einspritzen eines Flüssigtreibstoffs;
einem katalytischen Element (20) zum Veranlassen einer Zersetzung des Flüssigtreibstoffs; und
einer elektrischen Widerstandsheizeinrichtung (30) zum elektrischen Vorheizen des katalytischen Elements;
**dadurch gekennzeichnet, dass**
das katalytische Element mit der elektrischen Widerstandsheizeinrichtung thermisch verbunden ist, um eine Kombination (100) aus der Heizeinrichtung und dem katalytischen Elements zu bilden, wobei die Kombination als Zündeinrichtung (100) bezeichnet wird, und wobei die Heizeinrichtung ein Heizelement in der Form eines Kabels aufweist, wobei das Kabel eine hitzebeständige Ummantelung aufweist; und
dadurch, dass das katalytische Element und die Heizeinrichtung in einem Strömungsweg des Treibstoffs angeordnet sind.

2. Chemisches Raketentriebwerk (1) für Flüssigtreibstoff mit dem Zündsystem nach Anspruch 1, wobei das Zündsystem in den Reaktor des Raketentriebwerks integriert ist, und wobei der Strömungsweg derjenige des Treibstoffs in den Reaktor des Raketentriebwerks (1) ist.

3. Zündsystem nach Anspruch 1 für ein Raketentriebwerk (2) für Flüssigtreibstoff, wobei das System in einem Vorbrenner (200) angeordnet ist, wobei das System ferner aufweist:
eine Vorbrenner-Brennkammer (200); und
einen Auslass (220) von der Vorbrenner-Brennkammer für heiße Gase, die in das Raketentriebwerk (2) geleitet werden sollen, um es zu erwärmen, wobei der Strömungspfad derjenige des Treibstoffs in den Vorbrenner ist.

4. Chemisches Raketentriebwerk (2) für Flüssigtreibstoff mit dem Zündsystem nach Anspruch 3, wobei das Zündsystem stromaufwärts vom Raketentriebwerk angeordnet ist und der Auslass des Systems mit dem stromaufwärtsseitigen Ende des Raketentriebwerks verbunden ist, so dass heiße Gase vom Vorbrenner in das Raketentriebwerk geleitet werden können.

5. Chemisches Raketentriebwerk (3) für Flüssigtreibstoff mit dem Zündsystem nach Anspruch 1, wobei das Zündsystem in einem Vorbrenner (300) integriert ist, der mit der Einspritzeinrichtung (405) des Raketentriebwerks verbunden ist, um das Raketentriebwerk vorzuheizen, wobei der Vorbrenner derart konfiguriert ist, dass ermöglicht wird, dass ein heißer Gasstrom (440) vom Vorbrenner zu einem Abschnitt der Innenfläche des Raketentriebwerkreaktorgehäuses gerichtet wird, wobei die Innenfläche stromaufwärts vom Katalysatorbett des Raketentriebwerks angeordnet ist, und wobei die Einspritzeinrichtung (405) des Raketentriebwerks dafür konfiguriert ist, den Treibstoff (430) in Richtung zum Abschnitt der Innenfläche des Raketentriebwerkreaktorgehäuses zu sprühen.

6. Chemisches Raketentriebwerk (1) nach Anspruch 2 oder chemisches Raketentriebwerk (2) nach Anspruch 4, wobei ein oder mehrere Temperatursensoren in der Zündeinrichtung (100) vorgesehen sind.

7. Verfahren zum Vorheizen eines chemischen Raketentriebwerks (1, 2, 3) für Flüssigtreibstoff, mit den Schritten:
A Erwärmen eines katalytischen Elements (20) auf eine vorgegebene Temperatur durch eine elektrische Widerstandsheizeinrichtung (30);
B Bereitstellen eines Stroms eines Einkomponenten-Flüsstreibstoffs;
C Inkontaktbringen des Stroms des Flüssigtreibstoffs mit dem erwärmten katalytischen Element, um ihn zu verdampfen und eine Zersetzung des Flüssigtreibstoffs zu veranlassen;
D Verbrennen des Flüssigtreibstoffs, um heiße Gase zu erzeugen; und
E Leiten der heißen Gase stromabwärts durch das Triebwerk (1, 2, 3), um es zu erwärmen,
**dadurch gekennzeichnet, dass**
in Schritt A die elektrische Wärme innerhalb des Reaktors des Triebwerks (1), innerhalb eines am Triebwerk (2) befestigten Vorbrenners (200) oder innerhalb eines an der Einspritzeinrichtung (405) des Triebwerks (3) befestigten Vorbrenners (300) mittels einer elektrischen Widerstandsheizeinrichtung (30) erzeugt wird, die ein Heizelement in der Form eines Kabels aufweist, wobei das Kabel eine hitzebeständige Ummantelung aufweist.

8. Verfahren nach Anspruch 7, wobei der Strom des Einkomponenten-Flüssigtreibstoffs versprüht, zerstäubt oder in feine Tröpfchen verteilt wird, bevor er mit dem katalytischen Element in Kontakt gebracht wird.

9. Verfahren nach Anspruch 7 oder 8, wobei die Schritte A bis E intermittierend ausgeführt werden, um eine gepulste Erwärmung des Triebwerks (1, 2) zu erreichen.

10. Verfahren nach einem der Ansprüche 7 bis 9, zusätzlich mit dem Schritt zum Erfassen der Vorheiztemperatur an einer oder an mehreren vorgegebenen Stellen im Reaktor des Triebwerks (1, 2) oder des Vorbrenners (200).

11. Verfahren nach einem der Ansprüche 7 bis 10, wobei die Schritte A bis D in einem Vorbrenner (200) ausgeführt werden, der mit dem stromaufwärtsseitigen Ende des Raketentriebwerks (2) verbunden ist, so dass in Schritt E heiße Gase vom Vorbrenner in das Raketentriebwerk geleitet werden können.

12. Verfahren nach einem der Ansprüche 7 bis 11, wobei die Schritte A bis E wiederholt werden, bis eine ausreichende Vorheiztemperatur des Triebwerks (1, 2) für eine ununterbrochene Verbrennung im Triebwerk erreicht worden ist, wenn der Flüssigtreibstoff darin eingespritzt wird.

13. Raumfahrzeug mit einem chemischen Raketentriebwerk (1) für Flüssigtreibstoff nach Anspruch 2 und/oder einem chemischen Raketentriebwerk (2) für Flüssigtreibstoff nach Anspruch 4 und/oder einem chemischen Raketentriebwerk (3) für Flüssigtreibstoff nach Anspruch 5.

## Revendications

1. Système d'allumage pour un moteur de fusée chimique à propergol liquide (1, 2, 3) comprenant :
un injecteur (10) pour l'injection d'un propergol liquide ; un élément catalytique (20) pour amorcer la décomposition du propergol liquide ; et un dispositif de chauffage électrique résistif (30) pour préchauffer électriquement l'élément catalytique,
**caractérisé en ce que**
l'élément catalytique est raccordé thermiquement audit dispositif de chauffage électrique résistif, de façon à former une combinaison (100) dudit dispositif de chauffage et dudit élément catalytique, dans lequel ladite combinaison est désignée comme étant un allumeur (100) et ledit dispositif de chauffage comprend un élément chauffant sous la forme d'un câble, ledit câble ayant une gaine thermorésistante, et **en ce que** lesdits élément catalytique et dispositif de chauffage sont situés dans un trajet d'écoulement du propergol.

2. Moteur de fusée chimique à propergol liquide (1), comprenant le système d'allumage selon la revendication 1, dans lequel le système d'allumage est intégré au réacteur du moteur de fusée, et dans lequel le trajet d'écoulement est celui du propergol dans le réacteur du moteur de fusée (1).

3. Système d'allumage selon la revendication 1 pour un moteur de fusée à propergol liquide (2), lequel système est compris dans un pré-brûleur (200), dans lequel le système comprend en outre : une chambre de combustion de pré-brûleur (110) ; et, un orifice de sortie (220) à partir de la chambre de combustion de pré-brûleur pour des gaz chauds devant être amenés jusqu'au moteur de fusée (2) pour le chauffage de celui-ci, dans lequel le trajet d'écoulement est celui du propergol dans le pré-brûleur.

4. Moteur de fusée chimique à propergol liquide (2), comprenant le système d'allumage selon la revendication 3, dans lequel le système d'allumage est situé en amont du moteur de fusée et l'orifice de sortie du système est raccordé à l'extrémité en amont du moteur de fusée, de sorte que des gaz chauds provenant du pré-brûleur puissent être amenés dans le moteur de fusée.

5. Moteur de fusée chimique à propergol liquide (3), comprenant le système d'allumage selon la revendication 1, dans lequel le système d'allumage est intégré à un pré-brûleur (300) raccordé à l'injecteur (405) du moteur de fusée pour le préchauffage du moteur de fusée, lequel pré-brûleur est configuré pour permettre à un flux de gaz chauds (440) provenant du pré-brûleur d'être dirigé vers une partie de la surface interne du coffrage du réacteur du moteur de fusée, laquelle surface est située en amont du lit de catalyseur du moteur de fusée, et dans lequel l'injecteur du moteur de fusée (405) est configuré pour pulvériser le propergol (430) vers ladite partie de la surface interne du coffrage du réacteur du moteur de fusée.

6. Moteur de fusée chimique (1) selon la revendication 2, ou moteur de fusée (2) selon la revendication 4, dans lequel un ou plusieurs capteurs de température sont inclus dans l'allumeur (100).

7. Procédé de préchauffage d'un moteur de fusée chimique à propergol liquide (1, 2, 3) comprenant les étapes de :
A chauffage au moyen d'un dispositif de chauffage électrique résistif (30) d'un élément catalytique (20) à une température prédéterminée ;
B fourniture d'un écoulement d'un monopropergol liquide ;
C mise en contact du flux de propergol liquide avec l'élément catalytique chauffé, de façon à évaporer et amorcer la décomposition du propergol liquide ;
D combustion du propergol liquide, de façon à former des gaz chauds ; et,
E le fait de mener les gaz chauds en aval à travers le moteur (1, 2, 3) de façon à chauffer celui-ci,
**caractérisé en ce que**
à l'étape A, la chaleur électrique est générée à l'intérieur du réacteur du moteur (1), à l'intérieur d'un pré-brûleur (200) attaché au moteur (2), ou à l'intérieur d'un pré-brûleur (300) raccordé à l'injecteur (405) du moteur (3), au moyen d'un dispositif de chauffage électrique résistif (30) comprenant un élément chauffant sous la forme d'un câble, ledit câble ayant une gaine thermorésistante.

8. Procédé selon la revendication 7, dans lequel le flux de monopropergol liquide est pulvérisé, atomisé ou finement divisé en gouttelettes avant d'être mis en contact avec l'élément catalytique.

9. Procédé selon la revendication 7 ou 8, dans lequel les étapes A à E sont réalisées de manière intermittente, de façon à accomplir un chauffage pulsé du moteur (1, 2).

10. Procédé selon l'une quelconque des revendications 7 à 9, comprenant en outre l'étape de détection de la température de préchauffage au niveau d'un ou plusieurs emplacements donnés dans le réacteur du moteur (1, 2), ou du pré-brûleur (200).

11. Procédé selon l'une quelconque des revendications 7 à 10, dans lequel les étapes A à D sont réalisées dans un pré-brûleur (200) raccordé à l'extrémité en amont du moteur de fusée (2), de sorte que, à l'étape E, des gaz chauds provenant du pré-brûleur puissent être amenés dans le moteur de fusée.

12. Procédé selon l'une quelconque des revendications 7 à 11, dans lequel les étapes A à E sont répétées jusqu'à ce qu'une température de préchauffage suffisante du moteur (1, 2) ait été atteinte afin qu'une combustion entretenue dans le moteur puisse être atteinte lors de l'injection dans celui-ci du propergol liquide.

13. Engin spatial comprenant un moteur de fusée chimique à propergol liquide (1) selon la revendication 2, et/ou un moteur de fusée chimique à propergol liquide (2) selon la revendication 4, et/ou un moteur de fusée chimique à propergol liquide (3) selon la revendication 5.
